# EUROPEAN PATENT APPLICATION

(11) **EP 2 228 032 A1**
(43) Date of publication of application: **15.09.2010**
(21) Application number: 09003568.4
(22) Date of filing: 11.03.2009
(51) Int. Cl.: A61C 8/00

(54) **Dental abutment**

(71) Applicant: GC Corporation, Itabashi-ku Tokyo 174-8585 (JP)
(72) Inventor: Naert, Ignace, 3000 Leuven (BE); Noguchi, Tsuyoshi, Tokyo 174-8585 (JP)
(74) Representative: Müller-Boré & Partner Patentanwälte

(57) **Abstract**

An objective of the present invention is to provide a dental abutment, which is to be fixed at a dental implant fixture to have strong adhesion with a gingiva, can prevent invasion of bacteria into the jawbone, and hardly causes bone resorption and soft tissue shrinkage, and which is structured such that a spiral projection or a plurality of ring-like projections having approximately equal intervals are formed along a circumferential direction on an outer periphery of the dental abutment contacting with the gingiva, and the projection has a width of 1 to 500µm and a height of 1 to 500µm.

## Description

The present invention relates to a dental abutment which is fixed at a dental implant fixture (implant) and hardly causes bone absorption or gingival shrinking.

As a treatment for recovering an oral function of a defective tooth, a dental implant treatment is spreading now. The treatment includes the steps of implanting a dental implant fixture as an artificial dental root into a jawbone at the position of the defective tooth so as to be bonded with the jawbone, and fixing a dental prosthesis on the dental implant fixture. In the general dental implant treatment, a dental abutment penetrating the gingiva is attached on the dental implant fixture, and the dental prosthesis is fixed on the dental abutment.

A gingival tissue of a portion subjected to the dental implant treatment after extracting a tooth is to be a scar tissue having a different property from that of a gingival tissue before extracting the tooth. Thus, a gingiva around the dental implant fixture and the dental abutment may be called a mucosa around implant in order to distinguish it from the gingiva before extracting a tooth. The tissue around the dental implant fixture and the dental abutment has fewer fibroblasts than the gingiva before extracting a tooth, and thus has lower repair ability against infection with bacteria. Therefore, in the dental implant treatment, bacteria enter more easily into a jawbone from a part between the periphery of the dental abutment and the gingiva, so as to easily become a cause to advance bone absorption.

Further, a gingival fiber (collagen fiber) in a gingiva before extracting a tooth regenerates so as to be perpendicular to a natural tooth, but the gingival fiber in a tissue regenerated after installing a dental fixture regenerates so as to be parallel with the dental fixture. As such the gingival fiber being parallel with the dental fixture is weakly bound with the dental fixture and the dental abutment, and thus gingival involution is easily caused. As a result, a top end side of the gingiva contacting with the dental abutment is shrunk so that bacteria enter into a jawbone, and thus bone resorption advances or aesthetic properties decrease.

In order to solve the problem of bone resorption or the like, Claim 8 in Japanese Translation of PCT Publication No. 2007-519467, for example discloses a trans-mucosal element (a dental abutment or a spacer) having a groove or concave part wholly or partially extending at the periphery in order to integrate a gingiva and the trans-mucosal element. The groove is formed to increase stability between the trans-mucosal element and the peripheral gingiva. However, since the size of the groove disclosed in the paragraph 0017 in Japanese Translation of PCT Publication No. 2007-519467 is very fine and shallow i.e., a width of about 100 nm and a depth of about 70 nm, a tissue consisting of a gingiva cannot enter into the groove, and it is unclear what factor of such a fine and shallow groove increases the stability between the trans-mucosal element and the peripheral gingiva. Further, since a gingival tissue after extracting a tooth is a scar tissue which is different from a gingival tissue before extracting a tooth, it is hard to obtain the same effect as that of the gingival tissue before extracting a tooth, even when the groove is formed with the aim to integrate the trans-mucosal element and the peripheral gingiva.

Further, a gingiva transplant and a surgical treatment method using Emdogain, GTR or GBR, which are carried out after bone absorption or gingival shrinking has been caused, are proposed. However, these treatment methods have not been fully established yet, and burden to a patient is high. Thus, these methods are not preferable.

The present invention is to solve these problems, and an objective of the present invention is to provide a dental abutment which is to be fixed at a dental fixture to have strong adhesion with a gingiva, that can prevent invasion of bacteria into the jawbone, and hardly causes bone resorption and soft tissue shrinkage.

Present inventors carried out earlier work to solve the aforementioned problems and, as a result, they found out the following to complete the present invention. According to the invention, a dental abutment to be fixed at a dental fixture is provided with a spiral projection or a plurality of ring-like projections having approximately equal intervals, along a circumferential direction on an outer periphery contacting with a gingiva, and the projection has a width of 1 to 500µm and a height of 1 to 500µm. As a result, since the spiral projection or ring-like projections tightly contact with a peripheral gingival tissue so as to have a multiple sealing state, it can be prevented that bacteria invade into a jawbone from an oral cavity. Further, the projection tightly contacting with the gingiva can suppress shrinkage of the gingiva.

That is, the present invention is a dental abutment being fixed on the dental implant fixture to penetrate the gingiva, and becoming a base of a dental prosthesis, wherein a spiral projection or a plurality of ring-like projections having approximately equal intervals are formed along a circumferential direction on an outer periphery of the dental abutment contacting with the gingiva, and the projection has a width of 1 to 500µm and a height of 1 to 500µm.

A dental abutment according to the present invention is fixed on the dental implant fixture to penetrate the gingiva, and becomes a base of a dental prosthesis, a spiral projection or a plurality of ring-like projections having equal intervals are formed along a circumferential direction on an outer periphery of the dental abutment contacting with the gingiva, and the projection has a width of 1 to 500µm and a height of 1 to 500µm. Thus, since the spiral projection or ring-like projections tightly contact with a peripheral gingival tissue so as to have a multiple seal state, it can be prevented that bacteria invade into a jawbone from an oral cavity. Further, the projection tightly contacting with the gingiva can suppress shrinkage of the gingiva.

Fig. 1 is a perspective view for illustrating one embodiment of a dental abutment according to the present invention.

Fig. 2 is an explanatory view for describing a use state of the dental abutment in Fig. 1 by illustrating cross sections of the gingiva and the jawbone.

Fig. 3 is a perspective view for illustrating another embodiment of a dental abutment according to the present invention.

Fig. 4 is an explanatory view for describing a use state of the dental abutment of Fig. 3 by illustrating cross sections of the gingiva and the jawbone.

A dental abutment according to the present invention will be described in detail below with reference to the drawings.

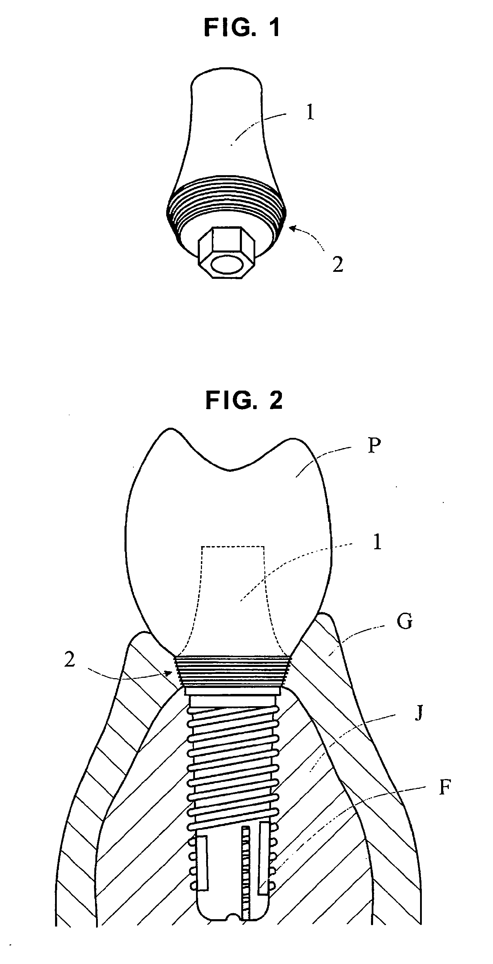

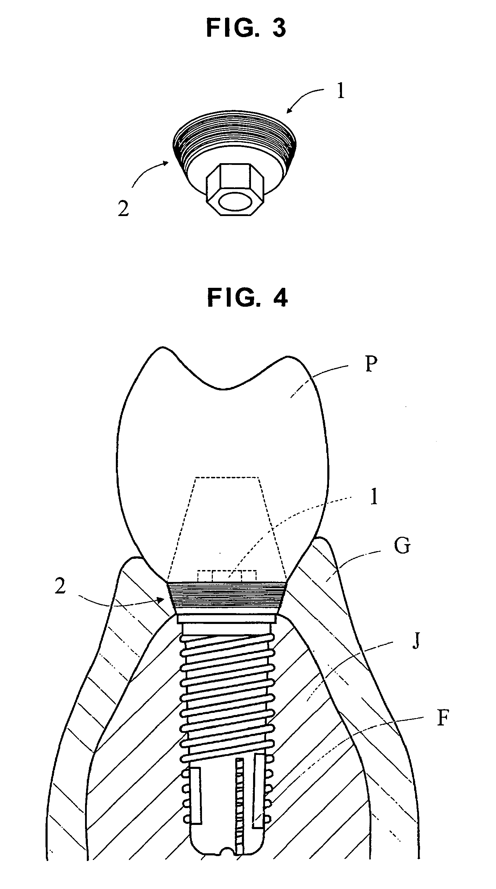

Fig. 1 is a perspective view for illustrating one embodiment of a dental abutment according to the present invention. Fig. 2 is an explanatory view for describing a use state of the dental abutment in Fig. 1 by illustrating cross sections of the gingiva and the jawbone. Fig. 3 is a perspective view for illustrating another embodiment of a dental abutment according to the present invention. Fig. 4 is an explanatory view for describing the use state of the dental abutment of Fig. 3 by illustrating cross sections of the gingiva and the jawbone.

In the drawings, a symbol F indicates a dental implant fixture, and symbol P indicates a dental prosthesis. The dental implant fixture F and the dental prosthesis P can have various shapes without any limitations. A symbol G indicates the gingiva and a symbol J indicates the jawbone.

A dental abutment 1 is fixed on the dental implant fixture F to penetrate the gingiva, and becomes a base of the dental prosthesis P. The dental abutment 1 is not restricted especially except for having a projection 2 mentioned below. For example, the dental abutment 1 can have a forming part for the dental prosthesis P, as illustrated in Figs. 1 and 2, or can have a separate member which is engaged on the oral cavity side and used as a forming part for the dental prosthesis P, as illustrated in Figs. 3 and 4. Further, the dental abutment 1 can be made of pure titanium, a titanium alloy or ceramics, which has high biocompatibility.

A spiral projection 2 or a plurality of ring-like projections 2 having equal intervals are formed along a circumferential direction on an outer periphery of the dental abutment 1 contacting with the gingiva and the projection 2 has a width of 1 to 500µm and a height of 1 to 500µm.

The reason for limiting the width of the groove to be 1 to 500µm is as follows. If the width of the projection 2 is less than 1µm, a width for closely contacting with the gingiva is too narrow, so that strong adhesion is hardly obtained. If the width is more than 500µm, the projection 2 and the gingiva contact over a wide width. However, since an internal tissue of the gingiva does not have a flat contacting face, gaps are easily formed between the projection 2 and the gingiva, so that they do not tightly contact. As a result, the sealing ability between the dental abutment 1 and the gingiva decreases.

Particularly, if the width is within 100 to 300µm, the projection 2 comes easily in close contact with the gingiva, and the sealing effect on the jawbone side increases. So, it is preferable.

Further, the reason for limiting the height of the groove to be 1 to 500µm is the following. If the height of the projection 2 is less than 1µm, there is almost no difference between the projection 2 and a portion at which the projection 2 is not formed. Thus, the sealing ability tends to decrease. Further, if the height is more than 500µm, the projection 2 is easily deformed or broken by bending because of having a remarkably thin width of 1 to 500µm. Thus, there occur problems in strength and durability.

In addition, the gingival fiber (collagen fiber) in the gingiva is an aggregate of fine fibers having a diameter of 0.1 to 0.5µm, and the gingival fiber itself has a diameter of about 2 to 20µm. Then, if the gingival fiber can enter between the projections 2 and 2, a binding force between the dental abutment 1 and the gingiva can establish. Therefore, the interval between the projections 2 and 2 is preferably 20µm or more. Particularly, if the interval between the projections 2 and 2 is 100µm or more, the gingival fiber which regenerates in parallel with the dental abutment 1 after extracting a tooth can easily enter between the projections 2 and 2 which are formed so as to be perpendicular to the dental abutment 1. If the interval between the projections 2 and 2 is more than 500µm, the gingival fiber having entered between the projections 2 and 2 can easily regenerate in parallel with the abutment 1 in the interval between the projections 2 and 2, and thus the binding force between the dental abutment 1 and the gingiva can not be increased.

One dental abutment 1 according to the present invention is illustrated in Figs. 1 and 2. In this dental abutment 1, eight ring-like projections 2 respectively having a width of about 100µm and a height of about 100µm are formed to have intervals of about 150µm on an inclined face of the dental abutment 1 having a height of about 2 mm and closely contacting with the gingiva.

Further, the dental abutment 1 having the dental prosthesis P is fixed to the dental implant fixture F implanted into a jawbone, as illustrated in Fig. 2. The dental abutment 1 has the projections 2 formed almost equally over the whole inclined face closely contacting with the gingiva, and the gingiva G is strongly bound with the dental abutment 1 by the eight ring-like projections 2. Thus, bacteria will invade less into the jawbone J from the external.

Next, in a dental abutment 1 according to the present invention as illustrated in Figs. 3 and 4, sixteen ring-like projections 2 respectively having a width of about 50µm and a height of about 50µm are formed to have intervals of about 50µm at a portion having a height of about 1.6 mm on the oral cavity side of the inclined face of the dental abutment 1 having a height of about 2 mm and closely contacting with the gingiva. In such a case that the projections 2 are not formed over the whole portion closely contacting with the gingiva, the effect for suppressing gingival shrinking can be improved when the projections 2 are formed on the oral cavity side as shown in Figs. 3 and 4, and thus it is preferable.

## Claims

1. A dental abutment (1) being fixed on the dental implant fixture (F) to penetrate a gingiva and becoming a base of a dental prosthesis (P),
wherein a spiral projection (2) or a plurality of ring-like projections (2) having approximately equal intervals are formed along a circumferential direction on an outer periphery of the dental abutment (1) contacting with the gingiva, and wherein the projection (2) has a width of 1 to 500µm and a height of 1 to 500µm.
